# EUROPEAN PATENT SPECIFICATION

(11) **EP 1 501 222 B1**
(45) Date of publication and mention of the grant of the patent: **25.04.2007**
(21) Application number: 04017421.1
(22) Date of filing: 23.07.2004
(51) Int. Cl.: H04H 1/00

(54) **Apparatus and method for transmitting/receiving information in a Digital Multimedia Broadcast Service**
Vorrichtung und Verfahren zum Senden/Empfangen von Informationen in einem digitalen multimedia Rundfunkdienst
Appareil et procédé de transmission/réception d'informations dans un service de diffusion multimédia numérique

(30) Priority: 25.07.2003 KR 2003051519
(43) Date of publication of application: 26.01.2005
(73) Proprietor: LG ELECTRONICS INC., Seoul (KR)
(72) Inventor: Lee, Chul Soo, Seoul (KR)
(74) Representative: Vetter, Ewald Otto

(56) References cited:
- US-A- 5 452 288
- US-B1- 6 415 135
- "Radio Broadcasting Systems; Digital Audio Broadcasting (DAB) to mobile, portable and fixed receivers; ETSI EN 300 401" ETSI STANDARDS, EUROPEAN TELECOMMUNICATIONS STANDARDS INSTITUTE, SOPHIA-ANTIPO, FR, vol. BC, no. V133, May 2001 (2001-05), XP002372525

## Description

This application claims the benefit of the Korean Application No. P2003-51519 filed on July 25, 2003.

### BACKGROUND OF THE INVENTION

### Field of the Invention

The present invention relates to a mobile broadcast service, and more particularly, to an apparatus for transmitting/receiving information for digital multimedia broadcast (DMB) service and method thereof.

### Discussion of the Related Art

Generally, as high-quality sound digital audio devices for CD, DVD, and the like rapidly become widespread, the audience demand for digital broadcast of high-quality sound is rising. In order to overcome the limit of sound quality provided by the previous FM broadcast, digital audio broadcasts (DAB) are in operation in Europe, Canada, U.S.A., etc. The DAB system has outstanding mobile reception capability as well as high quality sound using the technology completely different from that of the current AM or FM broadcasting. And, the DAB system has a feature of enabling high-speed transmission/reception of digital data such as video and characters. Lately, it is called digital multimedia broadcast (DMB) to emphasize various multimedia services including video rather than the audio broadcast.

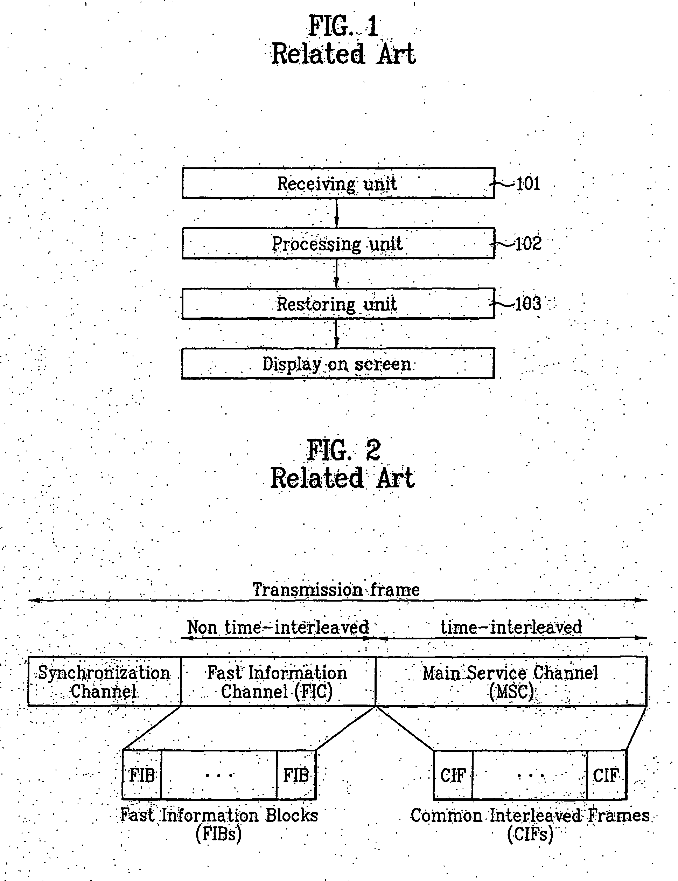

FIG. 1 is a block diagram of a DMB receiver.

Referring to FIG. 1, a Eureka-147 receiving unit 101 receives a DMB broadcast signal transmitted by OFDM (orthogonal frequency division multiplexing) transmission to perform FFT (fast Fourier transform) and carries out deinterleaving in time and frequency domains to output the corresponding signal to an MPEG-2 TS processing unit 102.

The MPEG-2 TS processing unit 102 separates A/V signals from the multiplexed signal and then decodes the separated signal by referring to PAT (program association section), PMT (transport stream program map section), etc.

And, an MPEG-4 restoring unit 103 decodes supplementary data to display on a screen.

Thus, in a mobile broadcast service, the multimedia data is transmitted based on the European standard, Eureka-147[ETSI EN 300 401] of DAB (digital audio broadcast) and uses transport stream (TS) [ISO/IEC 13818-1] of MPEG-2 (moving picture experts group 20 in program multiplexing and synchronization. In MPEG-2, information required for program configuration is transmitted via PAT (program association section) and PMT (transport stream program map section).

In the Eureka-147 system, important information is transferred via FIC (fast information channel). In doing so, it is specified to transfer the program configuration and the like. The FIC is characterized in that time interleaving is avoided to acquire necessary information within a fast access time. And, the FIC is used in transmitting such a structural data as service information and the like.

FIG. 2 is a structural diagram of DMB transmission frame used in the Eureka-147 system.

Referring to FIG. 2, a DMB transmission frame consists of a synchronization channel, a fast information channel (FIC), and a main service channel (MSC). The FIC consists of fast information blocks (FIBs), and the MSC consists of common interleaved frames (CIFs). A smallest unit allocated for address in the CIF is a capacity unit (CU) that is 64-bits.

And, the number of the FIBs of the FIC and the number of the CIFs of the MSC are determined according to a transmission mode.

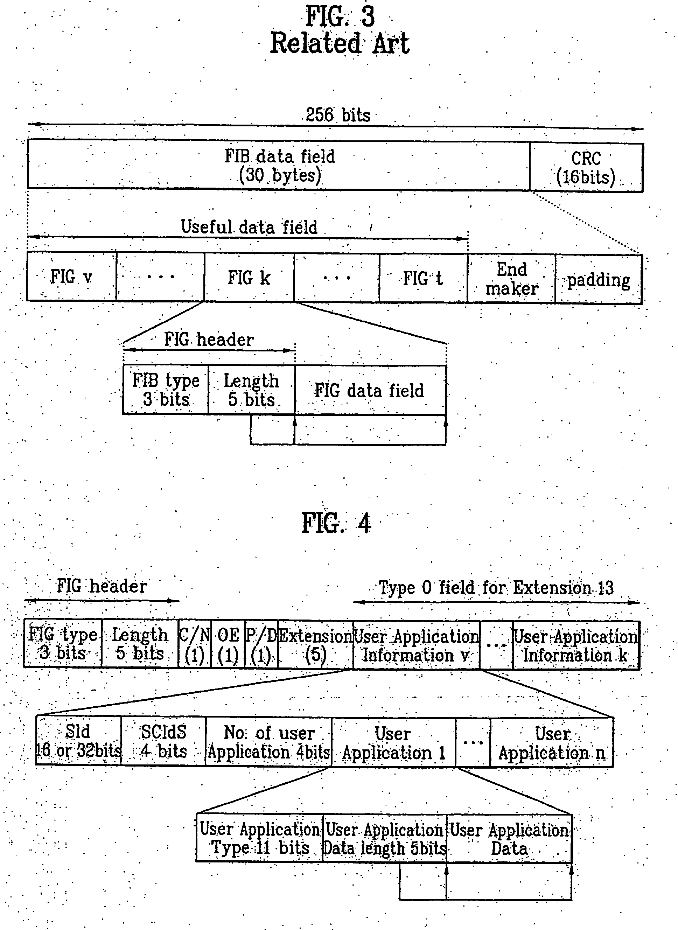

FIG. 3 is a detailed structural diagram of FIB.

Referring to FIG. 3, one FIB (fast information block) consists of a plurality of fast information groups (FIGs). One FIB consists of 256-bits and data can be written in front 240-bits, i.e., 30-bytes, of the 256-bits. Each of the FIBs configuring the FIB is divided into a FIG header and a FIG data field. Hence, a length of the FIG is unable to exceed 30-bytes including the header.

In the Eureka-147 system used in Europe, the FIG makes use of five out of eight usable types. Each FIG type can be extended per type. For instance, in case of type 0 of the FIG, thirty-two kinds of extensions are available. And, thirty kinds of extensions are currently used. They are used for configuration information of ensemble, content of sub-channel, paging, and the like.

However, when MPEG-2 TS information is sent using a stream mode of the DAB from a transmitting side, data is transmitted using MSC, whereby time-interleaving occurs. Hence, a predetermined time of delay is inevitable in establishing a logical channel and receiving to decode substantial data in a receiving side.

### SUMMARY OF THE INVENTION

Accordingly, the present invention is directed to an apparatus for transmitting/receiving information for digital multimedia broadcast (DMB) service and method thereof that substantially obviate one or more problems due to limitations and disadvantages of the related art.

An object of the present invention is to provide an apparatus for transmitting/receiving information for digital multimedia broadcast (DMB) service and method thereof, by which data required for decoding is transmitted fast and by which the received data is facilitated to be quickly decoded.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a transmitter for a DMB service according to the present invention includes an FIC coder coding a service information including at least one of a simplified PAT (program association table), a modified PMT (program map table), a modified IOD (initial object descriptor), and an ES (elementary stream) descriptor into a FIC (fast information channel) structure, a pre-processor performing interleaving and error correction on an audio/video signal, an MSC coder coding the pre-processed signal into an MSC (main service channel) structure, a multiplexer multiplexing the FIC-coded service information and the MSC-coded audio/video signal, a modulator modulating the multiplexed signal, and a transmitting unit converting the modulated signal to an RF (radio frequency) band signal to transmit.

In another aspect of the present invention, an information transmitting method for a DMB service includes the steps of coding a service information including at least one of a simplified PAT (program association table), a modified PMT (program map table), a modified IOD (initial object descriptor), and an ES (elementary stream) descriptor into a FIC (fast information channel) structure and performing interleaving and error correction on an audio/video signal to code into an MSC (main service channel) structure, multiplexing the FIC-coded service information, the MSC-coded audio/video signal, and data, modulating the multiplexed signal, and converting the modulated signal to an RF (radio frequency) band signal to transmit.

In another aspect of the present invention, an information receiver for a DMB service includes an A/D converter receiving an analog broadcast signal constructed with a transmission frame configured with MSC and FIC including at least one of a simplified PAT, modified PMT, modified IOD, and ES descriptor to convert the analog signal to a digital signal, a demodulator demodulating the digital signal, a demultiplexer dividing the demodulated signal into the FIC and the MSC, an FIC decoder decoding data of the FIC, an MSC data decoding data of the MSC, a processor performing deinterleaving and error correction on the decoded data of the MSC, a memory storing the data of the FIC, and a controller controlling the MSC decoder using the data of the FIC.

In another aspect of the present invention, an information receiving method for a DMB service includes the steps of receiving an analog broadcast signal constructed with a transmission frame configured with MSC and FIC including at least one of a simplified PAT, modified PMT, modified IOD, and ES descriptor to convert the analog signal to a digital signal, demodulating the digital signal, dividing the demodulated signal into the FIC and the MSC, decoding data of the FIC, decoding data of the MSC using the decoded data of the FIC, and performing deinterleaving and error correction on the decoded data of the MSC.

It is to be understood that both the foregoing general description and the following detailed description of the present invention are exemplary and explanatory and are intended to provide further explanation of the invention as claimed.

### BRIEF DESCRIPTION OF THE DRAWING

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a DMB receiver;

FIG. 2 is a structural diagram of DMB transmission frame used in the Eureka-147 system;

FIG. 3 is a detailed structural diagram of FIB;

FIG. 4 is a structural diagram of FIG type 0 extension 13 for information transfer according to the present invention;

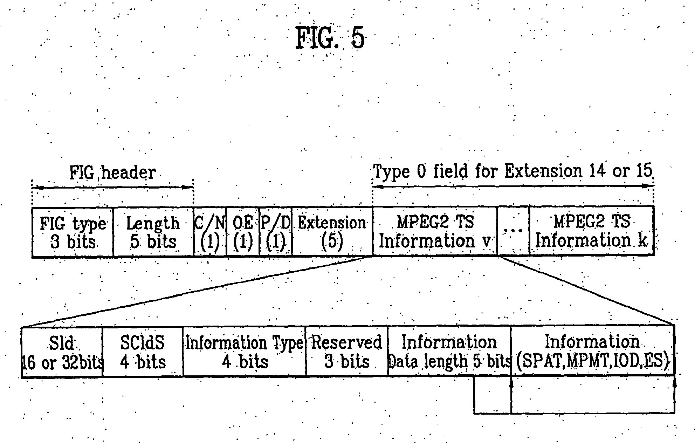

FIG. 5 is a structural diagram of FIG type 0 extensions 14 and 15 for information transfer according to the present invention;

FIG. 6 is a diagram of a DMB transmitter according to the present invention; and

FIG. 7 is a diagram of a DMB receiver according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like part.

A MPEG-2 TS processor needs information of PAT (simplified program association table) and PMT (modified program map table) to decode a TS stream. This is because information associated with a program contained in the TS stream is included in the PAT and because information needed to configure each program is included in the PMT. Hence, if necessary informations such as PAT and PMT are transmitted via FIC from a transmitter, a receiver enables to access the necessary informations quickly to be facilitated to decode a received broadcast signal, thereby enabling to shorten a broadcast processing time.

For this, the present invention configures PAT and PMT transformed into a simple form by removing an overlapped portion with data of the Eureka-147 from the information of the previous PAT and PMT.

And, in the present invention, if data multiplexed to MPEG2 TS is the data of MPEG4 SL layer, IOD (initial object descriptor) is divided to be transmitted. In this case, ES_descriptor included in the IOD is separated to be transmitted.

Moreover, in case of transmitting bit stream multiplexed to MPEG-2 TS via the Eureka-147, PAT and PMT are transmitted using FIC.

(1) Extension of FIC to be used is explained in first to third embodiments of the present invention as follows.

First Embodiment

A first embodiment of the present invention uses extension 13 of FIG type 0 defined in Eureka-147.

The present invention enables to transmit PAT and PMT using other FIG type. Yet, FIG type 0 is allocated for the purpose of transmitting MCI (multiplex configuration information) and SI (service information), whereby configuration information of a multimedia broadcast can be transmitted using the same. Hence, extension of FIG type 0 is used in the first embodiment of the present invention.

FIG. 4 is a structural diagram of FIG type 0 extension 13 for information transfer according to the present invention.

Referring to FIG. 4, C/N (current/next) flag plays a role in informing whether FIG is a setup of a current or next service. The C/N flag plays a role in being overlapped with current_next_indicator included in PAT or PMT. OE flag informs whether a content corresponds to a current or other ensemble. This has no associated item with multimedia broadcast and is a portion allocated for AM/FM service. P/D flag plays a role in informing whether SId (service identifier) is 16-bits or 32-bits. And, in case of using '13', extension 5-bits field can be decided as '01101'.

Various fields used for FIG 0 extension 13 are explained as follows.

Referring to FIG. 4, Sid is a service identifier. And, SCIdS is a field for identifying a service component. The SCIdS field plays the same role of Transport_stream_id of MPEG2 TS. A field for informing the number of user applications and user application fields sequentially follow the SCIds field.

And, 11-bits are allocated to each of the user application fields to identify what kind of a data type it is. Moreover, most portions of the user application field are defined as 'reserved for future definition'. Namely, '0x006~0x3FF' is a reserved space for future definition. And, '0x400~0x7FF' is empty as well.

The user application type can be defined as one embodiment of the present invention as follows.

0x008 : Simplified PAT for MPEG2 TS(SPAT)
0x009 : Modified PMT for MPEG2 TS(MPMT)
0x00A : IOD without ES descriptor for MPEG4 SL over MPEG2 TS
0x00B : ES descriptor for MPEG4 SL over MPEG2 TS

Thus, in case of defining a user application type, a limitation is put on that a length of user application data is unable to exceed 23-bytes. Hence, the present invention modifies the conventional PAT and PMT to use the simplified PAT and modified PMT.

Second Embodiment

First of all, extensions 14 and 15 of FIG 0 are used as a second embodiment of the present invention.

In the second embodiment of the present invention, 4-bits re allocated to an information type to define the following four types. One implementation is shown as follows.

0000 : reserved
0001 : Simplified PAT for MPEG2 TS(SPAT)
0010 : Modified PMT for MPEG2 TS(MPMT)
0011 : IOD without ES descriptor for MPEG4 SL over MPEG2 TS
0100 : ES descriptor for MPEG4 SL over MPEG2 TS
0101~1111 : reserved for future definition

Third Embodiment

A third embodiment of the present invention can be implemented using FIG types 2, 3, and 4 that are not currently defined.

The corresponding implementation method can follow that of the first or second embodiment of according to the present invention.

(2) Meanwhile, a method of sending SPAT, MPMT, modified IOD, and ES descriptor information necessary for MPEG-2 TS using the FIC proposed in the first to third embodiments is explained as follows.

(a) Simplified PAT (SPAT)

In case that several programs are included within one MPEG-2 TS, PAT informs configuration information about the respective programs, i.e., information what PID is given to PMT to be transmitted.

The present invention simplifies PAT using a field of FIG in a manner that the PAT should include the information necessary for sending the PAT only.

Namely, implementation of Simplified_PAT syntax is shown as follows.

```
 Simplified_PAT_section () {
   reserved                               (2)
   version number                         (5)
   current next_indicator                 (1)
   for (j=0; j<N; j++) {
       program_number                     (16)
       reserved                           (3)
       program_map_PID                           (13)
   }
 }
```

In this case, version_number is a field for confirming whether PAT is modified or not. Reserved fields are provided in front and rear of the version_number field, respectively. The reserved field is provided for byte alignment. Program_number and program_map_PID corresponding to it are used for coping with PID of PMT. And, information included in each of the fields of the simplified PAT should be equal to the information included in PAT section of MPEG2 TS. If one program is included in the MPEG2 TS, the Simplified PAT may be unnecessary.

(b) Modified PMT (MPMT)

In the MPEG2 TS, PMT plays a role in informing what PID is given to the transmitted ES (elementary stream) required for configuring one program.

In the present invention, the modified PMT can be implemented in two ways. Namely, in case of transmitting MPEG2 TS bit stream to a service component, only one program is included in each bit stream to be transmitted or at least two programs are included in one bit stream to be transmitted. In doing so, the latter case needs program_number but the former case does not need program_number. This is because one service component corresponds to one program. Hence, Modified_PMT can be defined for each case as follows.

Shown in the following is the syntax of Modified PMT in case that at least two programs are included in TS bit stream.

```
 Modified_PMT_section () {
   program_number                          (16)
   first_section_flag                      (1)
   last_section_flag                       (1)
   version_number                          (5)
   current_next_indicator                  (1)
   if (first_section_flag=='1' {
      no_of elementary_stream              (3)
       PCR_PID                             (13)
   }
   for (i=0;i<N1;i++) {
       stream_type                         (8)
       reserved                            (3)
       elementary_PID                      (13)
       ES_ID                               (16)
   }
 }
```

In the embodiment of MPMT syntax, the bold-lettered fields are not defined in the conventional PMT and are operative in the following roles, respectively.

The first_section_flag is set to '1' if the modified PMT is a first portion among components configuring one PMT overall.

The last_section_flag is set to '1' if the modified PMT is a last portion among components configuring one PMT overall. Hence, if each of the first_section_flag and last_section_flag is set to '1', a complete PMT is described in one FIG.

The no_of_elementary_stream indicates the number of ES (elementary stream) necessary for configuring one program. As 3-bits are allocated to the no_of_elementary_stream, the number of ES is limited to '7'. This field is defined once of the first_section_flag is set to '1'. Simultaneously, PCR_PID is defined once as well.

If elements of MPEG4 SL layer are included in MPEG2 TS, the ES_ID is located next to elementary_PID and ES_ID includes SL_descriptor. In this case, the EX_ID is a mandatory field.

In MPEG2 TS, 'descriptor' following elementary_PID is designated as option. Yet, 'descriptor' is set as an essential field in Modified_PMT of the present invention.

Moreover, in order to include Modified_PMT in a user application data field of FIG 0 type extension 13, the present invention restricts a length of data field to 23-bytes. As the basic number of ES_stream required for configuring one program could be plural, the present invention defines first_section_flag and last_section_flag.

In case that one program is included in one MPEG2 TS only, program_number field is unnecessary. Hence, the program_number field included in the MPMT syntax can be deleted. In such a case, each of audio, visual, OD, and BIFS information required for configuring one program is made to correspond to one ES_stream and can be transmitted via one modified_PMT.

Shown in the following is the syntax of Modified PMT in case that only one program is included in TS bit stream.

```
 Modified_PMT_section () {
   first_section_flag                 (1)
   last section flag                  (1)
   version_number                     (5)
   current_next_indicator             (1)
   if (first_section_flag=='1' {
      no_of_elementary_stream         (3)
      PCR_PID                         (13)
   }
   for (i=O:i<Nl;i++) {
      stream_type                     (8)
      reserved                        (3)
      elementary_PID                  (13)
       ES_ID                          (16)
   }
 }
```

In the MPMT syntax, program_number as a first field is deleted from the Modified PMT syntax of the case that at least two programs are included on TS bit stream.

(c) Modified IOD Transmitting Method Using FIC

When data of MPEG4 SL layer is transmitted using MPEG2 TS, IOD descriptor should be included in a first loop of the previous PMT to be transmitted. Yet, the method of transmitting PMT including IOD therein has difficulty in being included in one FIG. Hence, the present invention transmits IOD via different format.

The following embodiment defines modified IOD descriptor.

```
 Modified_IOD_descriptor () {
   ObjectDescriptorID             (10)
   reserved=Ob001111              (6)
   ODProfileLevelIndication       (8)
   sceneProfileLevelIndication    (8)
   audioProfileLevelIndication    (8)
   visualProfileLecelIndication         (8)
   graphicsProfileLevelIndication    (8)
   no_of_ESD    (8)
 }
```

The modified IOD_descriptor does not include ES descriptor as well as InitialDescriptorTag. This can be described in extension of FIG, thereby being skipped. And, modified IOD_descriptor includes the information **no_of_ESD** about how many ES descriptors are needed.

(d) ES descriptor Transmitting Method Using FIC

The present invention does not use the following fields included in the previous ES descriptor in order to include one EX descriptor in one FIB.

The unused fields are IPI_DescrPointer, IP_IdentificationDataSet, IPMP_DescriptorPointer, LanguageDescriptor lagnDescr, Qos_Descriptor, RegistrationDescriptor, and ExtensionDescriptor.

**.** Moreover, the ES descriptor separates SLConfigDescriptor. 'predefined=0x01' is set up to set the separated SLConfigDescriptor to 'null SL packet header'. And, the SLConfigDescriptor among descriptors transferred to OD stream is set up by a user.

Thus, the simplified PAT and modified PMT are set up by extracting the necessary informations only from the previous PAT and PMT according to the method and specification of Eureka-147.

Moreover, the present invention transmits IOD (initial object descriptor) in case that data multiplexed to MPEG2 TS is the data of MPEG4 SL layer. For this, the present invention divides the previous IOD to transmit and separates ES_descriptor included in the IOD from the IOD to transmit as well.

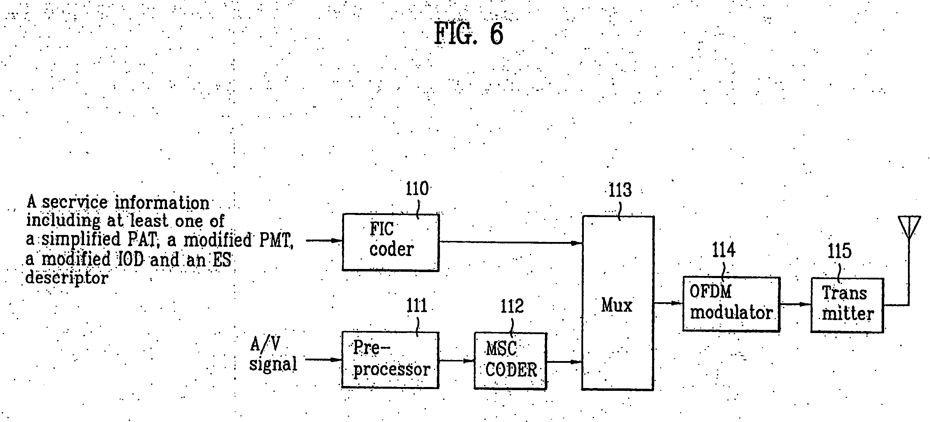

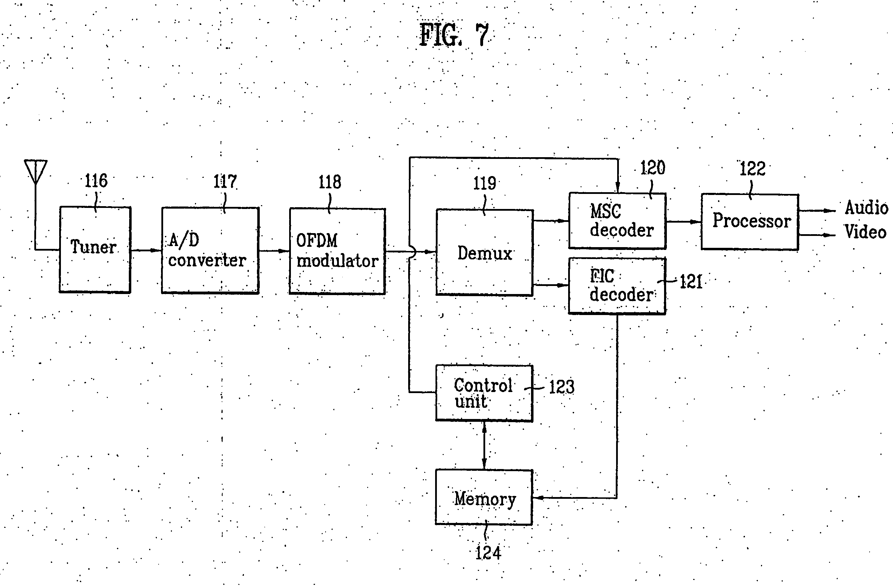

FIG. 6 is a diagram of a DMB transmitter according to the present invention.

Referring to FIG. 6, an FIC coder 110 encodes service information including at least one of simplified PAT (Program Association Table), modified PMT (Program Map Table), modified IOD (Initial Object Descriptor), and ES(Elementary Stream) descriptor into FIC (fast information channel) structure. And, a pre-processor 111 performs interleaving and error correction on audio and video and an MSC coder 112 then encodes the pre-processed signal into MSC (main service channel) structure.

Subsequently, a multiplexer 113 performs multiplexes on the FIC-encoded service information, MSC-encoded audio, video, and data signal, a modulator 114 modulates the multiplexed signal by OFDM (orthogonal frequency-division multiplexing, and a transmitter 115 then converts the modulated signal into an RF (radio frequency) band signal to transmit to a DMB received.

In doing so, at least one of the simplified PAT, modified PMT, modified IOD, and ES descriptor is included in FIG data field of FIB configuring the FIC, and the FIG data field could be one of FIG type 0 extension 13, FIG type 0 extension 14, FIG type 0 extension 15, FIG type 2, FIG type 3, and FIG type 4.

At least one of the simplified PAT, modified PMT, modified IOD, ES descriptor is included in user application data in user application field of the FIG type 0 extension 13, and an identifier identifying the simplified PAT, modified PMT, modified IOD, ES descriptor is included in the user application field.

A length of the user application data may not exceed 23-bytes.

The simplified PAT includes version_number field for confirming whether the PAT is modified, Program_number field, and Program_map_PID field. If one program is included in the transmitted signal only, the simplified PAT may not be included in the transmitted signal.

The modified PMT includes first_section_flag field, last_section_flag field, no_of_elementary_stream field, and ES_ID field. In case that elements of MPEG4 SL layer are included in the transmitted signal, the EX_ID field in located next to elementary_PID.

And, if at least two programs are included in the transmitted signal, the modified PMT includes Program_number field. If one program is included in the transmitted signal, the modified PMT fails to include the Program_number field therein.

And, the modified IOD does not include ES descriptor and Initial Descriptor Tag but includes no_of_ESD informing information of the number of necessary descriptors. If data of MPEG4 SL layer is included in the transmitted signal, the ES descriptor is separated from IOD descriptor and can be transmitted via FIC.

FIG. 7 is a diagram of a DMB receiver according to the present invention.

Referring to FIG. 8, a tuner 116 tunes an analog broadcast signal constructed with a transmission frame configured with MSC and FIC including at least one of the simplified PAT, modified PMT, modified IOD, and ES descriptor. An A/D converter 117 converts the analog signal to a digital signal. And, a demodulator 118 demodulates the digital signal.

A demultiplexer 119 divides the demodulated signal into FIC and MSC. And, an FIC decoder 121 decodes data of the FIC.

A memory 124 stores the decoded data of the FIC. And, a controller 123 controls an MSC decoder 120 using the data of the FIC.

The MSC decoder 120 decodes data of the MSC according to a control signal. And, a processor 122 performs deinterleaving and error correction on the decoded data to output audio/video signal.

Accordingly, in the present invention, MPEG-2 TS stream is transmitted via MSC of Eureka-147 and important information such as PAT, PMT, IOD, ESD, and the like is transmitted via FIC. Hence, a receiver acquires the important information from the FIC, thereby enabling to quickly access the data included in the MSC. Therefore, the receiver is facilitated to quickly handle the decoding of data.

Namely, when the present invention is applied to a mobile broadcast service such as a DMB service, substantial compression data can be more quickly accessed.

## Claims

1. A transmitter for a DMB service, comprising:
an FIC coder coding a service information including at least one of a simplified PAT (program association table), a modified PMT (program map table), a modified IOD (initial object descriptor), and an ES (elementary stream) descriptor into a FIC (fast information channel) structure;
a pre-processor performing interleaving and error correction on an audio/video signal;
an MSC coder coding the pre-processed signal into an MSC (main service channel) structure;
a multiplexer multiplexing the FIC-coded service information and the MSC-coded audio/video signal;
a modulator modulating the multiplexed signal; and
a transmitting unit converting the modulated signal to an RF (radio frequency) band signal to transmit.

2. The transmitter of claim 1, wherein the at least one of the simplified PAT, the modified PMT, the modified IOD, and the ES descriptor is included in an FIG (fast information group) data field of an FIB (fast information block) configuring the FIC.

3. The transmitter of claim 2, wherein the FIG data field is at least one selected from the group consisting of FIG type 0 extension 13, FIG type 0 extension 14, FIG type 0 extension 15, FIG type 2, FIG type 3, and FIG type 4.

4. The transmitter of claim 1, wherein the at least one of the simplified PAT, the modified PMT, the modified IOD, and the ES descriptor is included in user application data in a user application field of FIG type 0 extension 13 among FIG data fields of FIB (fast information block) configuring the FIC.

5. The transmitter of claim 4, wherein an identifier identifying the simplified PAT, the modified PMT, the modified IOD, and the ES descriptor is included in the-user application field.

6. The transmitter of claim 4, wherein a length of the user application data is unable to exceed 23-bytes.

7. The transmitter of claim 1, wherein the simplified PAT includes a version_number field confirming whether the PAT is modified, a Program_number field, and a Program_map_PID field.

8. The transmitter of claim 1, wherein the modified field includes a first_section_flag field, a last_section_flag field, a no_of_elementary_stream field, and an EX_ID field.

9. The transmitter of claim 1, wherein the modified IOD does not include an ES descriptor and an initial descriptor tag.

10. The transmitter of claim 1, wherein the modified IOD includes no_of_ESD informing information for a number of the necessary ES descriptor.

11. The transmitter of claim 1, wherein the ES descriptor does not use IPI_DescrPointer, IP_IdentificationDataSet, IPMP_DescriptorPointer, LanguageDescriptor lagnDescr, Qos_Descriptor, RegistrationDescriptor, and ExtensionDescriptor

12. An information transmitting method for a DMB service, comprising the steps of:
coding a service information including at least one of a simplified PAT (program association table), a modified PMT (program map table), a modified IOD (initial object descriptor), and an ES (elementary stream) descriptor into a FIC (fast information channel) structure and performing interleaving and error correction on an audio/video signal to code into an MSC (main service channel) structure;
multiplexing the FIC-coded service information, the MSC-coded audio/video signal, and data;
modulating the multiplexed signal; and
converting the modulated signal to an RF (radio frequency) band signal to transmit.

13. The information transmitting method of claim 12, wherein the at least one of the simplified PAT, the modified PMT, the modified IOD, and the ES descriptor is included in an FIG (fast information group) data field of an FIB (fast information block) configuring the FIC.

14. The information transmitting method of claim 13, wherein the FIG data field is at least one selected from the group consisting of FIG type 0 extension 13, FIG type 0 extension 14, FIG type 0 extension 15, FIG type 2, FIG type 3, and FIG type 4.

15. The information transmitting method of claim 12, wherein the at least one of the simplified PAT, the modified PMT, the modified IOD, and the ES descriptor is included in user application data in a user application field of FIG type 0 extension 13.

16. The information transmitting method of claim 15, wherein an identifier identifying the simplified PAT, the modified PMT, the modified IOD, and the ES descriptor is included in the user application field.

17. The information transmitting method of claim 15, wherein a length of the user application data is unable to exceed 23-bytes.

18. The information transmitting method of claim 12, wherein the simplified PAT includes a version_number field confirming whether the PAT is modified, a Program_number field, and a Program_map_PID field.

19. The information transmitting method of claim 12, wherein if one program is included in the transmitted signal only, the simplified PAT is not included in the transmitted signal.

20. The information transmitting method of claim 12, wherein the modified field includes a first_section_flag field, a last_section_flag field, a no_of_elementary_stream field, and an EX_ID field.

21. The information transmitting method of claim 20, wherein if the modified PMT is a first portion of components constructing one entire PMT, the first_section_flag field is set to 1 and wherein if the modified PMT is a last portion of the components constructing the one entire PMT, the last_section_flag field is set to 1.

22. The information transmitting method of claim 20, wherein the no_of_elementary_stream field is defined once only in case that the first_section_flag field is set to '1'.

23. The information transmitting method of claim 20, wherein the ES_ID field is located next to elementary_PID if elements of MPEG4 SL layer are included in the transmitted signal.

24. The information transmitting method of claim 12, wherein the modified PMT includes a program_number field if at least two programs are included in the transmitted signal and wherein the modified PMT does not include the program_number field if one program is included in the transmitted signal.

25. The information transmitting method of claim 12, wherein the modified IOD does not include an ES descriptor and an initial descriptor tag.

26. The information transmitting method of claim 12, wherein the modified IOD includes no_of_ESD informing information for a number of the necessary ES descriptor.

27. The information transmitting method of claim 12, wherein the ES descriptor is separated from an IOD descriptor to be transmitted via the FIC if data of MPEG-4 SL layer is included in the transmitted signal.

28. The information transmitting method of claim 12, wherein the ES descriptor does not use IPI_DescrPointer, IP_IdentificationDataSet, IPMP_DescriptorPointer, LanguageDescriptor lagnDescr, Qos_Descriptor, RegistrationDescriptor, and ExtensionDescriptor.

29. The information transmitting method of claim 12, wherein the EX descriptor separates SlConfigDescriptor and wherein predefined=0x01 is set up to set the separated SLConfigDescriptor to null SL packet header.

30. An information receiver for a DMB service, comprising:
an A/D converter receiving an analog broadcast signal constructed with a transmission frame configured with MSC and FIC including at least one of a simplified PAT, modified PMT, modified IOD, and ES descriptor to convert the analog signal to a digital signal;
a demodulator demodulating the digital signal;
a demultiplexer dividing the demodulated signal into the FIC and the MSC;
an FIC decoder decoding data of the FIC;
an MSC data decoder decoding data of the MSC;
a processor performing deinterleaving and error correction on the decoded data of the MSC;
a memory storing the data of the FIC; and
a controller controlling the MSC decoder using the data of the FIC.

31. An information receiving method for a DMB service, comprising the steps of:
receiving an analog broadcast signal constructed with a transmission frame configured with MSC and FIC including at least one of a simplified PAT, modified PMT, modified IOD, and ES descriptor to convert the analog signal to a digital signal;
demodulating the digital signal;
dividing the demodulated signal into the FIC and the MSC;
decoding data of the FIC;
decoding data of the MSC using the decoded data of the FIC; and
performing deinterleaving and error correction on the decoded data of the MSC.

## Patentansprüche

1. Transmitter für einen DMB-Dienst, umfassend:
einen FIC-Codierer, welcher eine Dienstinformation, enthaltend mindestens eines aus einer vereinfachten PAT (Program Association Table), einer modifizierten PMT (Program Map Table), einem modifizierten IOD (Initial Object Descriptor), und eines ES (Elementary Stream) -Descriptors in eine FIC (Fast Information Channel) -Struktur codiert;
einen Vorprozessor, welcher Interleaving und Fehlerkorrektur an einem Audio/Videosignal durchführt;
einen MSC-Codierer, welcher das vorverarbeitete Signal in eine MSC (Main Service Channel) -Struktur codiert;
einen Multiplexer, welcher die FIC-codierte Dienstinformation und das MSCcodierte Audio/Videosignal mulitplext;
einen Modulator, welcher das mulitplexte Signal moduliert;
eine Übertragungseinheit, welche das modulierte Signal in ein RF (Radio Frequency) -Band-Signal moduliert, zum Übertragen.

2. Transmitter nach Anspruch 1, wobei das mindestens eine aus der vereinfachten PAT, modifizierten PMT, modifizierten IOD, und des ES-Descriptors in einem FIG (Fast Information Group) -Datenfeld eines FIB (Fast Information Block) enthalten ist, welcher den FIC konfiguriert.

3. Transmitter nach Anspruch 2, wobei das FIG-Datenfeld mindestens eines ausgewählt aus der Gruppe bestehend aus FIG-Typ 0-Erweiterung 13, FIG-Typ 0-Erweiterung 14, FIG-Typ 0-Erweiterung 15, FIG-Typ 2, FIG-Typ 3 und FIG-Typ 4 ist.

4. Transmitter nach Anspruch 1, wobei das mindestens eine aus vereinfachter PAT, modifizierter PMT, modifiziertem IOD und dem ES-Descriptor in Nutzeranwendungsdaten in einem Nutzeranwendungsfeld der FIG-Typ 0-Erweiterung 13 zwischen FIG-Datenfeldern der FIB (Fast Information Block), welche den FIC konfigurieren, enthalten ist.

5. Transmitter nach Anspruch 4, wobei ein Identifier, welcher die vereinfachte PAT, die modifizierte PMT, den modifizierten IOD und den ES-Descriptor identifiziert, in dem Nutzeranwendungsfeld enthalten ist.

6. Transmitter nach Anspruch 4, wobei eine Länge der Nutzeranwendungsdaten 23 Byte nicht überschreiten kann.

7. Transmitter nach Anspruch 1, wobei die vereinfachte PAT ein version_number-Feld beinhaltet, welches bestätigt, ob die PAT modifiziert ist, ein Program_number-Feld und ein Program_map_PID-Feld.

8. Transmitter nach Anspruch 1, wobei das modifizierte Feld ein first_section_flag-Feld, last_section_flag-Feld, ein no_of elementary_stream-Feld und ein EX_ID-Feld enthält.

9. Transmitter nach Anspruch 1, wobei der modifizierte IOD keinen ES-Descriptor und kein initial descriptor tag enthält.

10. Transmitter nach Anspruch 1, wobei der modifizierte IOD über no_of_ESD informierende Information für eine Anzahl des notwendigen ES-Descriptors enthält.

11. Transmitter nach Anspruch 1, wobei der ES-Descriptor keinen IPI_DescrPointer, IP _IdentificationDataSet, IPMP_DescriptorPointer, LanguageDescriptor lagnDescr, Qos_Descriptor, RegistrationDescriptor und ExtensionDescriptor verwendet.

12. Informations-Übertragungsverfahren für einen DMB-Dienst, die Schritte aufweisend:
Codieren einer Dienstinformation einschließlich mindestens einem aus einer vereinfachter PAT (Program Association Table), einer modifizierten PMT (Program Map Table), einem modifizierten IOD (Initial Object Descriptor), und eines ES (Elementary Stream) -Descriptors in eine FIC (Fast Information Channel) -Struktur und Durchführen von Interleaving und Fehlerkorrektur an einem Audio/Videosignal, um in eine MSC (Main Service Channel) -Struktur zu codieren;
Mulitplexen der FIC-codierten Dienstinformationen, des MSC-codierten Audio/Vidosignals, und der Daten;
Modulieren des multiplexten Signals; und
Konvertieren des modulierten Signals in ein RF (Radio Frequency) -Band-Signal zum Übertragen.

13. Informationsübertragungsverfahren nach Anspruch 12, wobei das mindestens eine aus vereinfachter PAT, modifizierter PMT, modifiziertm IOD, und dem ES-Descriptor in einem FIG (Fast Information Group) -Datenfeld eines FIB (Fast Information Block) enthalten ist, welcher den FIC konfiguriert.

14. Informationsübertragungsverfahren nach Anspruch 13, wobei das FIG-Datenfeld mindestens eines ist, ausgewählt aus der Gruppe bestehend aus FIG-Typ 0-Erweiterung 13, FIG-Typ 0-Erweiterung 14, FIG-Typ 0-Erweiterung 15, FIG-Typ 2, FIG-Typ 3 und FIG-Typ 4.

15. Informationsübertragungsverfahren nach Anspruch 12, wobei das mindestens eine aus vereinfachter PAT, modifizierter PMT, modifiziertem IOD und dem ES-Descriptor enthalten ist in Nutzeranwendungsdaten in einem Nutzeranwendungsfeld der FIG-Typ 0-Erweiterung 13.

16. Informationsübertragungsverfahren nach Anspruch 15, wobei ein Identifier, welcher die vereinfachte PAT, die modifizierte PMT, den modifizierten IOD und den ES-Descriptor identifiziert, im Nutzeranwendungsfeld enthalten ist.

17. Informationsübertragungsverfahren nach Anspruch 15, wobei eine Länge der Nutzeranwendungsdaten 23 Byte nicht überschreiten kann.

18. Informationsübertragungsverfahren nach Anspruch 12, wobei die vereinfachte PAT ein version_number-Feld beinhaltet, welches bestätigt, ob die PAT modifiziert ist, ein Program_number-Feld und ein Program_map_PID-Feld.

19. Informationsübertragungsverfahren nach Anspruch 12, wobei dann, wenn ein Programm nur in dem übertragenen Signal enthalten ist, die vereinfachte PAT in dem gesendeten Signal nicht enthalten ist.

20. Informationsübertragungsverfahren nach Anspruch 12, wobei das modifizierte Feld ein first_section_flag-Feld, ein last_section_flag-Feld, ein no_of_elementary_stream-Feld und ein EX_ID-Feld enthält.

21. Informationsübertragungsverfahren nach Anspruch 20, wobei dann, wenn die modifizierte PMT ein erster Teil von Komponenten ist, die eine gesamte PMT konstruieren, das first_section flag-Feld auf "1" gesetzt wird, und wobei dann, wenn die modifizierte PMT ein letzter Teil der Komponenten ist, die die eine gesamte PMT konstruieren, das last_section flag-Feld auf "1" gesetzt ist.

22. Informationsübertragungsverfahren nach Anspruch 20, wobei das no_of_elementary_stream-Feld nur einmal definiert ist, in dem Fall, dass das first_section_flag-Feld auf "1" gesetzt ist.

23. Informationsübertragungsverfahren nach Anspruch 20, wobei das ES_ID-Feld benachbart zu elementary_PID ist, wenn Elemente der MPEG4 SL-Schicht in dem übertragenen Signal enthalten sind.

24. Informationsübertragungsverfahren nach Anspruch 12, wobei die modifizierte PMT ein Program_number-Feld beinhaltet, wenn mindestens zwei Programme in dem übertragenen Signal enthalten sind, und wobei die modifiziere PMT kein Program_number-Feld enthält, wenn ein Programm in dem gesendeten Signal enthalten ist.

25. Informationsübertragungsverfahren nach Anspruch 12, wobei der modifizierte IOD keinen ES-Descriptor und kein initial descriptor tag enthält.

26. Informationsübertragungsverfahren nach Anspruch 12, wobei der modifizierte IOD über no_of_ESD- informierende Information für eine Anzahl des notwendigen ES-Descriptors enhält.

27. Informationsübertragungsverfahren nach Anspruch 12, wobei der ES-Descriptor von einem IOD-Descriptor getrennt ist, um via FIC übertragen zu werden, wenn Daten der MPEG4 SL-Schicht in dem übertragenen Signal enthalten sind.

28. Informationsübertragungsverfahren nach Anspruch 12, wobei der ES-Descriptor keinen IPI_DescrPointer, IP-IdentificationsDataSet, IPMP_DescriptorPointer, LanguageDescriptor IagnDescr, Qos_Descriptor, RegistrationDescriptor und ExtensionDescriptor verwendet.

29. Informationsübertragungsverfahren nach Anspruch 12, wobei der EX-Descriptor den SIConfigDescriptor trennt und wobei predefined=0x01 festgesetzt wird, um den getrennten SIConfigDescriptor auf den null SL packet header zu setzen.

30. Informationsempfänger für einen DMB-Dienst, aufweisend:
einen A/D-Converter, welcher ein analoges Rundfunksignal empfängt, welches mit einem Übertragungs-Frame konstruiert ist, welcher mit MSC und FIC konfiguriert ist einschließlich mindestens einem aus einer vereinfachten PAT, modifizierten PMT, modifizierten IOD und eines ES-Descriptors, um das analoge Signal in ein digitales Signal zu konvertieren;
einen Demodulator, welches das digitale Signal demoduliert;
einen Demulitplexer, welcher das demodulierte Signal in den FIC und den MSC teilt;
einen FIC-Decoder, welcher die Daten des FIC decodiert;
einen MSC-Datendecoder, welcher Daten des MSC decodiert;
einen Prozessor, welcher Deinterleaving und Fehlerkorrektur an den decodierten Daten der MSC durchführt;
einen Speicher, welcher die Daten des FIC speichert;
eine Steuereinrichtung, welche den MSC-Decoder unter Verwendung der Daten des FIC steuert.

31. Informationsempfangsverfahren für einen DMB-Dienst, die Schritte aufweisend:
Empfangen eines analogen Rundfunksignals, welches mit einem Übertragungsrahmen konstruiert ist, welcher mit MSC und FIC konfiguriert ist, enthaltend mindestens eines aus einer vereinfachten PAT, modifizierten PMT, modifiziertem IOD und ES-Descriptor, um das analoge Signal in ein digitales Signal zu konvertieren;
Demodulieren des digitalen Signals;
Teilen des demodulierten Signals in den FIC und den MSC;
Decodieren der Daten des FIC;
Decodieren des MSC unter Verwendung der decodierten Daten des FIC; und
Durchführen von Deinterleaving und Fehlerkorrektur an den decodierten Daten des MSC.

## Revendications

1. Émetteur pour un service de DMB (diffusion multimédia numérique), comprenant :
➢ un codeur de FIC codant une information de service incluant au moins l'un d'une PAT (table d'association de programme) simplifiée, d'une PMT (table de mise en correspondance de programme) modifiée, d'un IOD (descripteur d'objet initial) modifié et d'un descripteur d'ES (de flux binaire) dans une structure de FIC (canal d'information rapide);
➢ un pré-processeur effectuant un entrelacement et une correction d'erreurs sur un signal audio/vidéo ;
➢ un codeur de MSC codant le signal de pré-processeur dans une structure de MSC (canal de service principal) ;
➢ un multiplexeur multiplexant l'information de service codée par le codeur de FIC et le signal audio/vidéo codé par le codeur de MSC ;
➢ un modulateur modulant le signal multiplexé ; et
➢ une unité de transmission convertissant le signal modulé en un signal de bande RF (fréquence radio) à transmettre.

2. Émetteur selon la revendication 1, dans lequel le au moins un de la PAT simplifiée, de la PMT modifiée, du IOD modifié et du descripteur d'ES est inclus dans un champ de données du FIG (groupe d'information rapide) d'un FIB (bloc d'information rapide) configurant le FIC.

3. Émetteur selon la revendication 2, dans lequel le champ de données du FIG est au moins l'un choisi parmi le groupe se composant de l'extension 13 de type 0 du FIG, l'extension 14 de type 0 du FIG, l'extension 15 de type 0 du FIG, du type 2 du FIG, du type 3 du FIG et du type 4 du FIG.

4. Émetteur selon la revendication 1, dans lequel le au moins un de la PAT simplifiée, de la PMT modifiée, de l'IOD modifié et du descripteur d'ES est inclus dans les données d'application utilisateur dans un champ d'application utilisateur de l'extension 13 de type 0 du FIG parmi les champs de données du FIB (bloc d'information rapide) configurant le FIC.

5. Émetteur selon la revendication 4, dans lequel un identificateur identifiant la PAT simplifiée, la PMT modifiée, l' IOD modifié et le descripteur d'ES est inclus dans le champ d'application utilisateur.

6. Émetteur selon la revendication 4, dans lequel une longueur des données d'application utilisateur n'est pas en mesure de dépasser 23 octets.

7. Émetteur selon la revendication 1, dans lequel la PAT simplifiée inclut un champ version_number confirmant si la PAT est modifiée, un champ Program_number et un champ Program_map_PID.

8. Émetteur selon la revendication 1, dans lequel le champ modifié inclut un champ first_section_flag, un champ last_section_flag, un champ no_of_elementary_stream et un champ EX_ID.

9. Émetteur selon la revendication 1, dans lequel l'IOD modifié n'inclut pas un descripteur d'ES et une étiquette de description initiale.

10. Émetteur selon la revendication 1, dans lequel l'IOD modifié inclut une information informant du no_of_ESD pour un numéro du descripteur d'ES nécessaire.

11. Émetteur selon la revendication 1, dans lequel le descripteur d'ES n'utilise pas IPI_ DescrPointer, IP_IdentificationDataSet, IPMP_ DescriptorPointer, LanguageDescriptor lagnDescr, Qos_Descriptor, RegistrationDescriptor et ExtensionDescriptor.

12. Procédé de transmission d'information pour un service de DMB, comprenant les étapes consistant à :
➢ coder une information de service incluant au moins l'un d'une PAT (table d'association de programme) simplifiée, d'une PMT (table de mise en correspondance de programme) modifiée, d'un IOD (descripteur d'objet initial) modifié et d'un descripteur d'ES (de flux élémentaire) dans une structure de FIC (canal d'information rapide) et effectuer un entrelacement et une correction d'erreurs sur un signal audio/vidéo à coder dans une structure de MSC (canal de service principal) ;
➢ multiplexer l'information de service codée par le codeur de FIC, le signal audio/vidéo codé par le codeur de MSC, et les données ;
➢ moduler le signal multiplexé; et
➢ convertir le signal modulé en un signal de bande RF (fréquence radio) à transmettre.

13. Procédé de transmission d'information selon la revendication 12, dans lequel le au moins un de la PAT simplifiée, de la PMT modifiée, du IOD modifié et du descripteur d'ES est inclus dans un champ de données du FIG (groupe d'information rapide) d'un FIB (bloc d'information rapide) configurant le FIC.

14. Procédé de transmission d'information selon la revendication 13, dans lequel le champ de données du FIG est au moins l'un choisi parmi le groupe se composant de l'extension 13 de type 0 du FIG, l'extension 14 de type 0 du FIG, l'extension 15 de type 0 du FIG, du type 2 du FIG, du type 3 du FIG et du type 4 du FIG.

15. Procédé de transmission d'information selon la revendication 12, dans lequel le au moins un de la PAT simplifiée, de la PMT modifiée, de l'IOD modifié et du descripteur d'ES est inclus dans les données d'application utilisateur dans un champ d'application utilisateur de l'extension 13 de type 0 du FIG.

16. Procédé de transmission d'information selon la revendication 15, dans lequel un identificateur identifiant la PAT simplifiée, la PMT modifiée, l'IOD modifié et le descripteur d'ES est inclus dans le champ d'application utilisateur.

17. Procédé de transmission d'information selon la revendication 15, dans lequel une longueur des données d'application utilisateur n'est pas en mesure de dépasser 23 octets.

18. Procédé de transmission d'information selon la revendication 12, dans lequel la PAT simplifiée inclut un champ version_number confirmant si la PAT est modifiée, un champ Program_number et un champ Program_map_PID.

19. Procédé de transmission d'information selon la revendication 12, dans lequel, si un programme est seulement inclus dans le signal transmis, la PAT simplifiée n'est pas incluse dans le signal transmis.

20. Procédé de transmission d'information selon la revendication 12, dans lequel le champ modifié inclut un champ first_section_flag, un champ last_section_flag, un champ no_of_ elementary_stream et un champ EX_ID.

21. Procédé de transmission d'information selon la revendication 20, dans lequel, si la PMT modifiée est une première partie des éléments composant toute une PMT, le champ first_section_ flag est mis à 1 et dans lequel, si la PMT modifiée est une dernière partie des éléments composant la seule PMT entière, le champ last_ section_flag est mis à 1.

22. Procédé de transmission d'information selon la revendication 20, dans lequel le champ no_of_ elementary_stream field est défini seulement une fois dans le cas où le champ first_section_flag est mis à '1'.

23. Procédé de transmission d'information selon la revendication 20, dans lequel le champ ES_ID est situé à côté du champ elementary_PID si les éléments de la couche SL (esclave) MPEG4 sont inclus dans le signal transmis.

24. Procédé de transmission d'information selon la revendication 12, dans lequel la PMT modifiée inclut un champprogram_number si au moins deux programmes sont inclus dans le signal transmis et dans lequel la PMT modifiée n'inclut pas le champ program_number si un programme est inclus dans le signal transmis.

25. Procédé de transmission d'information selon la revendication 12, dans lequel l' IOD modifié n'inclut pas un descripteur d'ES et une étiquette de description initiale.

26. Procédé de transmission d'information selon la revendication 12, dans lequel l' IOD modifié inclut une information informant du no_of_ESD pour un numéro du descripteur d'ES nécessaire.

27. Procédé de transmission d'information selon la revendication 12, dans lequel le descripteur d'ES est séparé d'un descripteur d' IOD qui doit être transmis via le FIC si les données de la couche SL MPEG-4 sont incluses dans le signal transmis.

28. Procédé de transmission d'information selon la revendication 12, dans lequel le descripteur d'ES n'utilise pas IPI_DescrPointer, IP_ IdentificationDataset, IPMP_DescriptorPointer, LanguageDescriptor lagnDescr, Qos_Descriptor, RegistrationDescriptor et ExtensionDescriptor.

29. Procédé de transmission d'information selon la revendication 12, dans lequel le descripteur d'EX sépare S1ConfigDescriptor et dans lequel "predefined=0x01" est mis en place pour mettre le SLConfigDescriptor séparé à un en-tête de paquet SL sans valeur.

30. Récepteur d'information pour un service de DMB, comprenant :
➢ un convertisseur A/N recevant un signal de diffusion analogique composé avec une trame de transmission configurée avec le MSC et le FIC incluant au moins l'un d'une PAT simplifiée, d'une PMT modifiée, d'un IOD modifié et d'un descripteur d'ES pour convertir le signal analogique en un signal numérique ;
➢ un démodulateur démodulant le signal numérique ;
➢ un démultiplexeur divisant le signal démodulé en FIC et en MSC ;
➢ un décodeur de FIC décodant les données du FIC ;
➢ un décodeur de données du MSC décodant les données du MSC ;
➢ un processeur effectuant un désentrelacement et une correction d'erreurs sur les données décodées du MSC;
➢ une mémoire stockant les données du FIC ; et
➢ un dispositif de commande commandant le décodeur de MSC en utilisant les données du FIC.

31. Procédé de réception d'information pour un service de DMB, comprenant les étapes consistant à :
➢ recevoir un signal de diffusion analogique composé avec une trame de transmission configurée avec le MSC et le FIC incluant au moins l'un d'une PAT simplifiée, d'une PMT modifiée, d'un IOD modifié et d'un descripteur d'ES pour convertir le signal analogique en un signal numérique ;
➢ démoduler le signal numérique
➢ diviser le signal démodulé en FIC et en MSC ;
➢ décodant les données du FIC ;
➢ décoder les données du MSC en utilisant les données décodées du FIC ; et
➢ effectuer un désentrelacement et une correction d'erreurs sur les données décodées du MSC.
